# EUROPEAN PATENT APPLICATION

(11) **EP 1 956 720 A1**
(43) Date of publication of application: **13.08.2008**
(21) Application number: 06768250.0
(22) Date of filing: 14.07.2006
(51) Int. Cl.: H04B 1/16, H04H 1/00, H04N 5/44

(54) **DIGITAL BROADCAST RECEIVER**

(30) Priority: 30.11.2005 JP 2005345645
(71) Applicant: MITSUBISHI ELECTRIC CORPORATION, Chiyoda-ku Tokyo 100-8310 (JP)
(72) Inventor: TAURA, Kenichi, Tokyo 100-8310 (JP); OHKUBO, Tadatoshi, Tokyo 100-8310 (JP); OKUMURA, Nobuyoshi, Tokyo 100-8310 (JP)
(74) Representative: HOFFMANN EITLE
(86) International application number: PCT/JP2006/314090
(87) International publication number: WO 2007/063622

(57) **Abstract**

A control section 8 including a search channel storing section 81 and a search channel number counter section 82 carries out tuning control by searching for, when a receiving condition of a current received station deteriorates, a second received station with referring to broadcasting-related information transmitted by broadcasting, and by checking the receiving condition of an original receiving channel every time a prescribed number of channels are searched.

## Description

### TECHNICAL FIELD

The present invention relates to a search tuning operation of an onboard digital broadcasting receiver based on broadcasting-related information superimposed on broadcasting waves.

### BACKGROUND ART

Recently, terrestrial digital broadcasting has been increasingly introduced, and the digital broadcasting makes it possible to achieve a variety of functions based on the broadcasting-related information superimposed on the broadcasting wave. In particular, as for an onboard digital broadcasting receiver, even if it is leaving a first broadcasting service area with the traveling of a vehicle during receiving, it can tune to and receive the identical or same broadcasting program in a second receivable broadcasting service area according to the broadcasting-related information.

Patent Document 1: Japanese Patent Laid-Open No. 2004-140690.

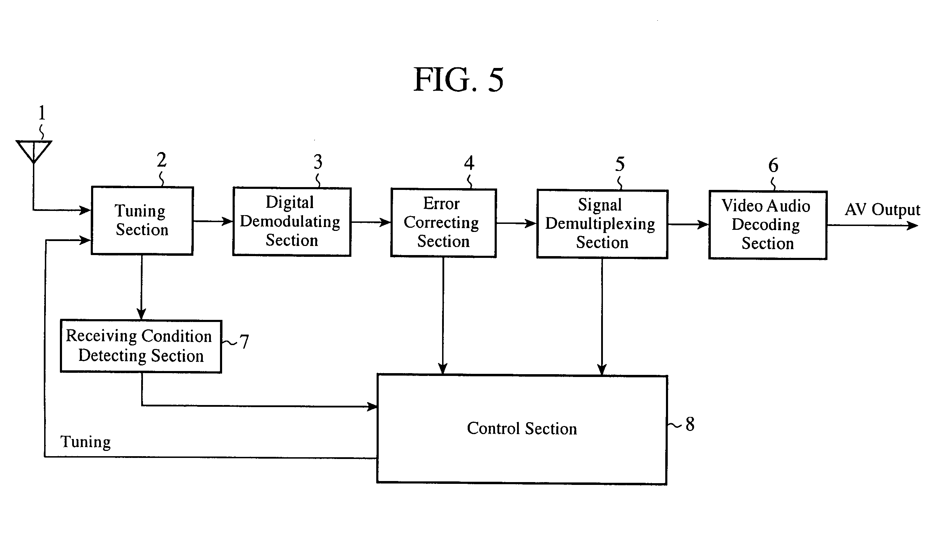

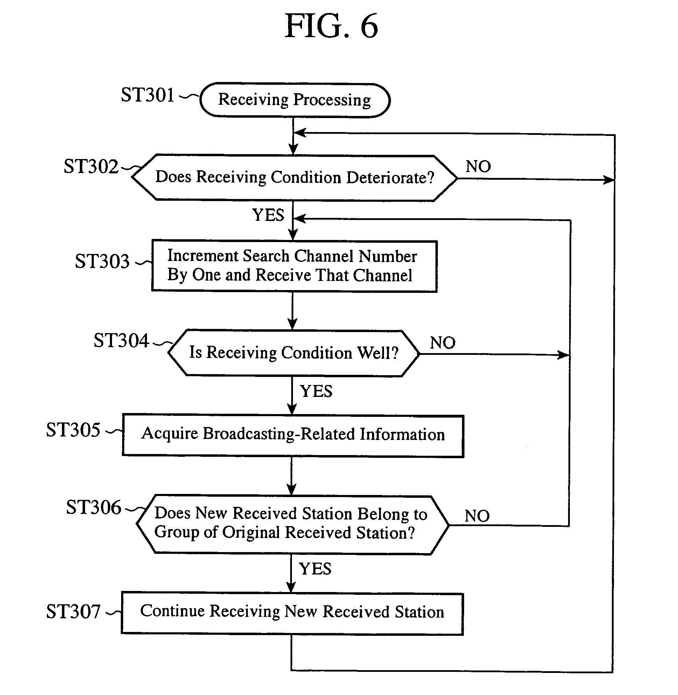

FIG. 5 is a block diagram showing a configuration of a conventional digital broadcasting receiver; and FIG. 6 is a flowchart illustrating the operation of the conventional digital broadcasting receiver. Here, FIG. 6 mainly illustrates the operation of a control section 8 when carrying out received station search operation.
In FIG. 5, the reference numeral 1 designates an antenna, 2 designates a tuning section, 3 designates a digital demodulating section, 4 designates an error correcting section, 5 designates a signal demultiplexing section, 6 designates a video audio decoding section, 7 designates a receiving condition detecting section, and 8 designates a control section. Radio waves in a broadcasting frequency band are received with the antenna 1 as an electric signal.
The tuning section 2 selects a particular broadcasting wave from the signal and amplifies it. In this case, the control section 8 instructs the tuning section 2 on the frequency of the broadcasting wave to be selected according to operation of a user or the like.

The tuning section 2 converts the broadcasting wave selected to a particular frequency through superheterodyne or orthogonal demodulation, and outputs it. The digital demodulating section 3 demodulates the broadcasting signal, which undergoes the digital modulation by orthogonal frequency division multiplexing, for example, by using fast Fourier transform or the like, and converts it to a digital signal.

The error correcting section 4 performs error correction of the digital signal passing through the modulation and transmission and reception and demodulation as the correcting code, and decodes it to broadcasting data with correcting data error occurring on a transmission path. At the same time, it provides the control section 8 with error occurrence frequency information.
The signal demultiplexing section 5 divides the video signal, audio signal and accessory information into comparatively short packet formats, respectively, and restores a series of signals with the same contents by demultiplexing information items from the time division multiplexed broadcasting signal.

The video audio decoding section 6 decodes a time-series sampled signal (PCM signal) by decompressing the video signal and audio signal restored by and output from the signal demultiplexing section 5.
The signal demultiplexing section 5 also provides the control section 8 with the broadcasting-related additional information.

The receiving condition detecting section 7 detects the level of the received signal fed from the tuning section 2, and provides the reception information estimated from the level to the control section 8.
Next, referring to FIG. 6, a second station search method involved in receiving condition deterioration of the current received station in the conventional apparatus will be described.

First, when the broadcasting receiving operation is started in response to user operation or the like (step ST301), the control section 8 makes a decision as to the receiving condition deterioration in response to the signal from the receiving condition detecting section 7 (step ST302). As a result, if the control section 8 makes a decision that the receiving condition deteriorates, it enters second station search processing at step ST303 and forward. Unless the receiving condition deteriorates, the control section 8 returns to step ST302 to continue the reception of the current received station with making the receiving condition monitoring.

In the reception, the control section 8 obtains from the signal demultiplexing section 5 the broadcasting-related information associated with the current received station. As the broadcasting-related information in the terrestrial digital broadcasting of Japan, information is provided about the broadcasting group to which the present broadcasting belongs, for example.

In the second station search processing when making a decision that the receiving condition deteriorates at step ST302, the control section 8 carries out the receiving processing cyclically by incrementing the receiving channel number by one at step ST303 (that is, including returning to the minimum channel number if the channel number exceeds the maximum channel number of the broadcasting band as a result of incrementing by one) ; and makes a decision at step ST304 as to the receiving condition in response to the signal from the receiving condition detecting section 7. If the broadcasting receiving condition on the channel is inferior, the control section 8 returns to step ST303 to repeat the receiving processing and receiving condition decision (step ST304) with incrementing the receiving channel number by one cyclically again.

If the control section 8 detects a good reception channel in this way, it obtains the broadcasting-related information from the signal demultiplexing section 5 at step ST305.
If the control section 8 makes a decision from the broadcasting-related information that the group of the newly received broadcasting is the same as that of the originally received station at step ST306, it employs the broadcasting on this channel as the new received station at step ST307. If the two groups differ, the control section 8 returns to step ST303 to repeat the receiving processing and receiving condition decision with cyclically incrementing the receiving channel number by one (step ST304).

The conventional apparatus carries out the control of the second station search involved in the receiving condition deterioration of the current received station as described above.
Accordingly, even if the receiving condition of the original received station deteriorates for a short time such as when the vehicle loaded with the receiver passes through a comparatively short tunnel or shielding like a building, a problem occurs of being unable to return to the original receiving channel until completing a round search of all the channels in the broadcasting band.

In addition, in a condition in which the broadcasting receiving condition temporarily deteriorates in a certain broadcasting area, the number of stations of the specific group receivable is usually only one, that is, the broadcasting station originally received. This presents a problem in that the condition can occur frequently in which the round search of all the channels in the broadcasting band must be made.
Although it matters little as long as the round search time is comparatively short, the time taken is actually considerably long in the case of the digital broadcasting.

More specifically, in the case of the digital broadcasting, the decoding of the broadcasting data and the reception of the broadcasting-related information become possible only after confirmation is obtained that the digital broadcasting signal has a prescribed format depending on whether the timing synchronization to the broadcasting signal succeeds or not, followed by passing through a stage of detecting transmission parameters selectable in the broadcasting standards and of setting receiver operation based on the parameters. Furthermore, since the information speed assigned to the transmission of the broadcasting-related information is limited, the particular information like the foregoing group station information is transmitted repeatedly at prescribed time intervals. Thus, the receiving side has to wait for the time intervals at the longest to obtain the information.

Thus, the second station search function involved in the receiving condition deterioration, which is originally useful for the onboard digital broadcasting receiver, presents a problem in that the short time receiving condition deterioration of the receiving broadcasting can cause unnecessary and longer time receiving interruption.

### DISCLOSURE OF THE INVENTION

The present invention is implemented to solve the foregoing problem. Therefore it is an object of the present invention to provide a digital broadcasting receiver capable of returning to the receiving operation of the current received station quickly if the receiving condition of the current received station recovers in a short time during the second station search involved in the receiving condition deterioration of the current received station. This is achieved by a configuration that checks the receiving condition of the original receiving channel every time a prescribed number of channels are searched in the second station search operation involved in the receiving condition deterioration of the current received station.

The digital broadcasting receiver in accordance with the present invention includes a tuning section for performing selective reception of a broadcasting channel; a digital demodulating section for performing digital demodulation of a broadcasting signal; an error correcting section for performing error correction of demodulation data the digital demodulating section demodulates; a signal demultiplexing section for demultiplexing broadcasting data into individual contents; a video audio decoding section; a receiving condition detecting section; and a control section, wherein the control section has a search channel storing section and a search channel number counter section, carries out tuning control by searching for, when a receiving condition of a current received station deteriorates, a second received station with referring to broadcasting-related information transmitted by broadcasting, and by checking the receiving condition of an original receiving channel every time a prescribed number of channels are searched.

According to the present invention, when the receiving condition of the current received station recovers in a short time during the second station search involved in the deterioration of the receiving condition of the current received station, the receiving operation of the current received station can be recovered quickly. Accordingly, it can improve the convenience of the digital broadcasting receiver.

### BRIEF DESCRIPTION OF THE DRAWINGS

FIG. 1 is a block diagram showing an entire configuration of an embodiment 1 in accordance with the present invention;
FIG. 2 is a flowchart illustrating the operation of the embodiment 1 in accordance with the present invention;
FIG. 3 is a block diagram showing an entire configuration of an embodiment 2 in accordance with the present invention;
FIG. 4 is a flowchart illustrating the operation of the embodiment 2 in accordance with the present invention;
FIG. 5 is a diagram for explaining a configuration of a conventional onboard digital broadcasting receiver; and
FIG. 6 is a flowchart illustrating the operation of the conventional onboard digital broadcasting receiver.

### BEST MODE FOR CARRYING OUT THE INVENTION

The best mode for carrying out the invention will now be described with reference to the accompanying drawings to explain the present invention in more detail.

### EMBODIMENT 1

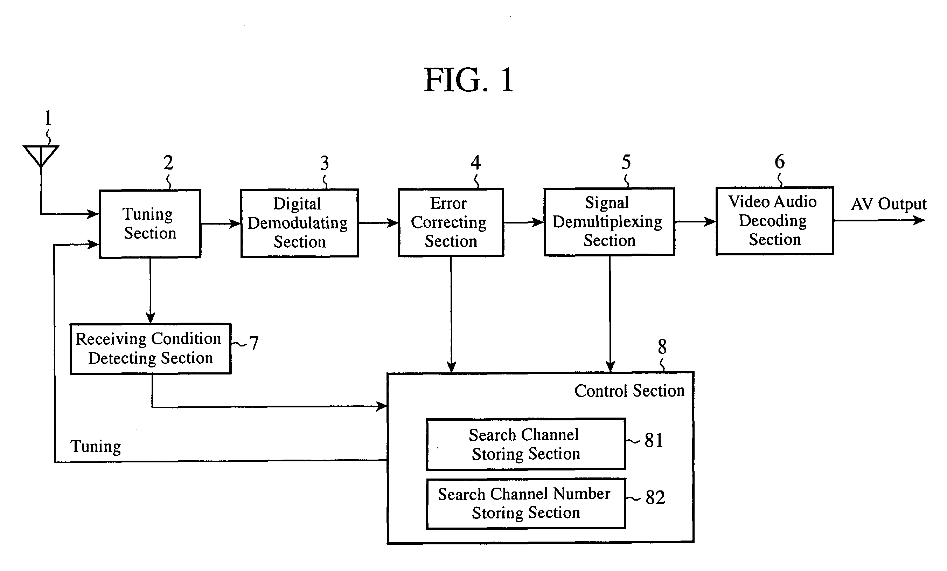

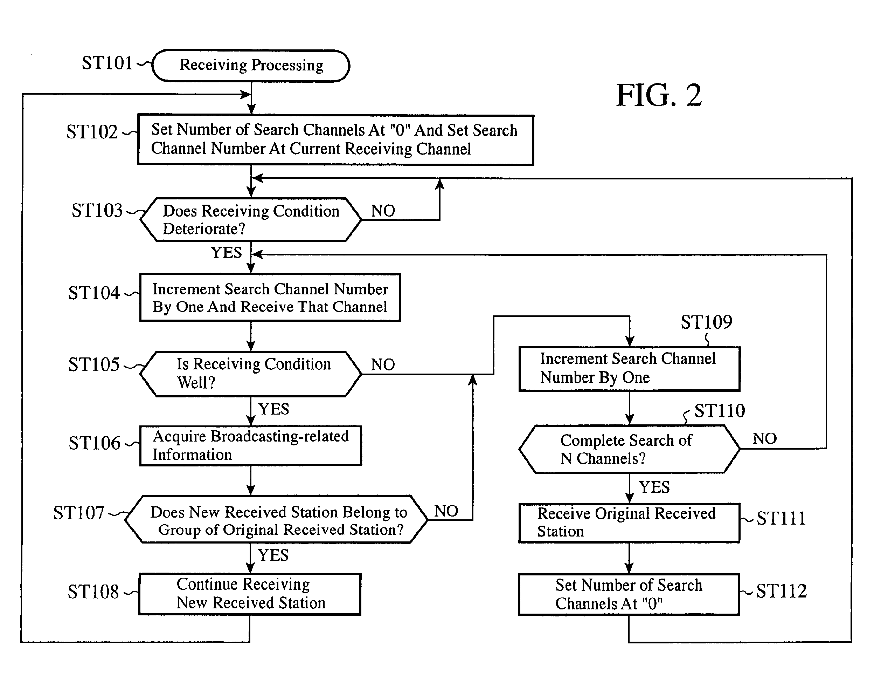

FIG. 1 is a block diagram showing a configuration of the digital broadcasting receiver of an embodiment 1 in accordance with the present invention; and FIG. 2 is a flowchart illustrating the operation of the receiver of the embodiment 1 in accordance with the present invention.
In these figures, the reference numeral 1 designates an antenna, 2 designates a tuning section, 3 designates a digital demodulating section, 4 designates an error correcting section, 5 designates a signal demultiplexing section, 6 designates a video audio decoding section, 7 designates a receiving condition detecting section, and 8 designates a control section. The control section 8 includes a search channel storing section 81 and a search channel number storing section 82.
The present embodiment will be described by way of example of an onboard digital broadcasting receiver.

The antenna 1 receives radio waves in the broadcasting frequency band as an electric signal. The tuning section 2 selects a particular broadcasting wave from the signal the antenna 1 receives, and amplifies it. In this case, the control section 8 instructs the tuning section 2 on the frequency of the broadcasting wave to be selected according to operation of a user or the like.

The tuning section 2 converts the broadcasting wave selected to a particular frequency through superheterodyne or orthogonal demodulation, and outputs it. The digital demodulating section 3 demodulates the broadcasting signal, which undergoes the digital modulation by orthogonal frequency division multiplexing, for example, by using fast Fourier transform or the like, and converts it to a digital signal.

The error correcting section 4 performs error correction of the digital signal passing through the modulation and transmission and reception and demodulation as the correcting code, and decodes it to broadcasting data with correcting data error occurring on a transmission path. At the same time, it provides the control section 8 with error occurrence frequency information.
The signal demultiplexing section 5 divides the video signal, audio signal and accessory information into comparatively short packet formats, respectively, and restores a series of signals with the same contents by demultiplexing information items from the time division multiplexed broadcasting signal.

The video audio decoding section 6 decodes a time-series sampled signal (PCM signal) by decompressing the video signal and audio signal restored by and output from the signal demultiplexing section 5.
The signal demultiplexing section 5 also provides the control section 8 with the broadcasting-related additional information.

The receiving condition detecting section 7 detects the level of the received signal fed from the tuning section 2, and provides the reception information estimated from the level to the control section 8.
The control section 8 includes a search channel storing section 81 and a search channel number storing section 82, and carries out second station search operation using them.

Next, referring to the flowchart illustrated in FIG. 2, the second station search operation involved in the receiving condition deterioration of the current received station in the onboard digital broadcasting receiver in accordance with the present invention will be described.

In the second station search operation involved in the receiving condition deterioration of the current received station of the present invention, when the broadcasting receiving operation is started in response to user operation or the like (step ST101), the control section 8 records the search channel number into the search channel storing section 81 as the current receiving channel number, and initializes the content of the search channel number storing section 82 to zero (step ST102).

Next, the control section 8 makes a decision as to the receiving condition deterioration in response to the signal from the receiving condition detecting section 7 (step ST103). As a result, if the control section 8 makes a decision that the receiving condition deteriorates, it enters the second station search processing at step ST104 and forward. Unless the receiving condition deteriorates, the control section 8 returns to step ST103 to continue the reception of the current received station with making the receiving condition monitoring. In this reception, the broadcasting-related information associated with the current received station is obtained from the signal demultiplexing section 5 in the same manner as in the conventional receiver.

When making a decision that the receiving condition deteriorates at step ST103, the control section 8 increments the search channel number in the search channel storing section 81 by one cyclically at step ST104 (that is, including returning to the minimum channel number if the channel number exceeds the maximum channel number of the broadcasting band as a result of incrementing by one), and carries out the receiving processing of the channel; and makes a decision at step ST105 as to the receiving condition in response to the signal from the receiving condition detecting section 7. If the broadcasting receiving condition on the channel is inferior, the control section 8 proceeds to step ST109 to increment the search channel number in the search channel number storing section 82 by one. Unless its result reaches a preset value N at step ST110, the control section 8 returns to step ST104 to repeat the receiving processing and receiving condition decision (step ST105) with incrementing the search channel number by one cyclically again. If the search channel number reaches N at step ST110, the control section 8 tunes to the original received station to receive it again at step ST111, returns the number of search channels to "0" at step ST112 , and enters step ST103 to restart the receiving condition monitoring.

If the control section 8 detects a good reception channel at step ST105, it obtains the broadcasting-related information from the signal demultiplexing section 5 at step ST106.
If making a decision from the group station information contained in the broadcasting-related information that the group of the searched and received broadcasting agrees with that of the originally received station at step ST107, the control section 8 controls in such a manner as to receive the searched and received station as the new received station at step ST108, to return the number of search channels to "0" and to set the search channel number at the new receiving channel number at step ST102, and to carry out the processing of the receiving condition monitoring at step ST103 and on.
At step ST107, if the searched and received broadcasting group differs from the group of the original received station, the control section 8 enters step ST109 to perform the same operation mentioned above.

As described above, the digital broadcasting receiver in accordance with the present invention does not search, in the group station search operation, the entire broadcasting band at a time, but searches an appropriate division of the broadcasting band one by one with limiting the number of channels to be searched at a time. Thus, every time the search of the division band has been completed, the control section 8 checks the receiving condition of the original channel, and returns, when the receiving condition recovers, to the broadcasting receiving operation with suspending the search.

Therefore it can recover the broadcasting reception of the original channel quickly with reducing the interruption duration of the broadcasting reception due to the search even in the condition in which the receiving condition deteriorates temporarily during the traveling of the vehicle and recovers in a short time.

### EMBODIMENT 2

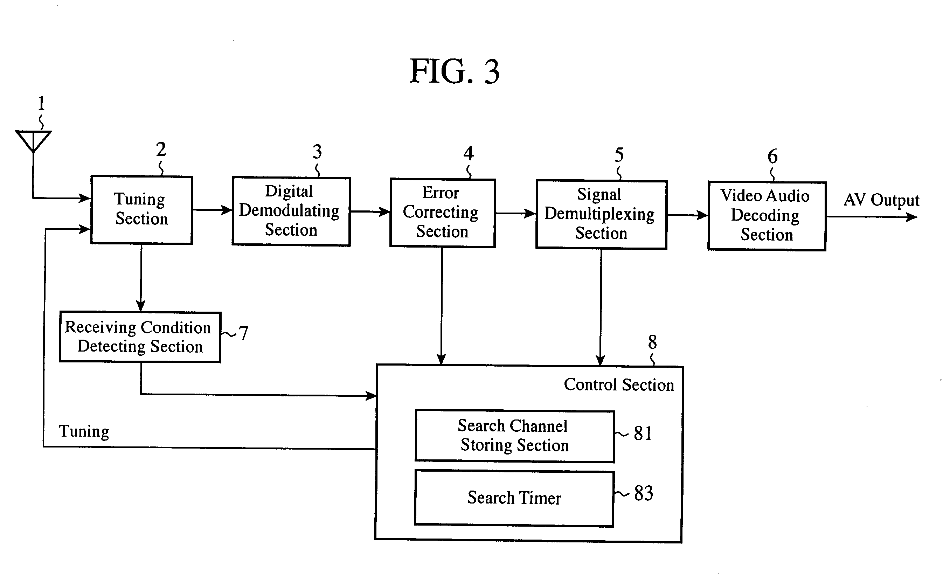

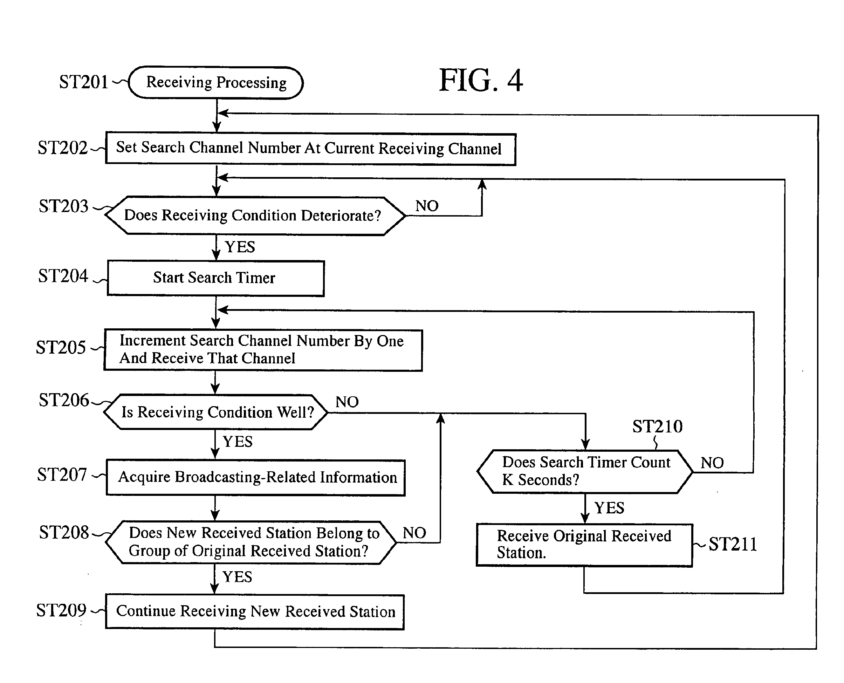

FIG. 3 is a block diagram showing a configuration of the digital broadcasting receiver of an embodiment 2 in accordance with the present invention; and FIG. 4 is a flowchart illustrating the operation of the receiver of the embodiment 2 in accordance with the present invention.
In these figures, the reference numeral 1 designates an antenna, 2 designates a tuning section, 3 designates a digital demodulating section, 4 designates an error correcting section, 5 designates a signal demultiplexing section, 6 designates a video audio decoding section, 7 designates a receiving condition detecting section, 8 designates a control section, 81 designates a search channel storing section and 83 designates a search timer.

In FIG. 3, the blocks designated by the same reference numerals as those of the conventional receiver shown in FIG. 5 primarily carry out the same operation. The present embodiment 2 differs from the conventional receiver in that the control section 8 includes the search channel storing section 81 and the search timer 83. Thus, the second station search operation becomes different. Next, referring to the flowchart illustrated in FIG. 4, the second station search operation involved in the receiving condition deterioration of the current received station in the onboard digital broadcasting receiver in accordance with the present invention will be described.

In the second station search operation involved in the receiving condition deterioration of the current received station of the present invention, when the broadcasting receiving operation is started in response to user operation or the like (step ST2 01), the control section 8 initializes the search channel number recorded in the search channel storing section 81 to the current receiving channel number (step ST202).

Next, the control section 8 makes a decision as to the receiving condition deterioration in response to the signal from the receiving condition detecting section 7 (step ST203). As a result, if the control section 8 makes a decision that the receiving condition deteriorates, it enters the second station search processing at step ST204 and forward. Unless the receiving condition deteriorates, the control section 8 returns to step ST203 to continue the reception of the current received station with making the receiving condition monitoring. In this reception, the broadcasting-related information associated with the current received station is obtained from the signal demultiplexing section 5 in the same manner as in the conventional receiver.

When making a decision that the receiving condition deteriorates at step ST203, the control section 8 starts the search timer 83 at step ST204 to measure the search time; increments the search channel number by one cyclically at step ST205 (that is, including returning to the minimum channel number if the channel number exceeds the maximum channel number of the broadcasting band as a result of incrementing by one), and carries out the receiving processing of the channel; and makes a decision at step ST206 as to the receiving condition in response to the signal from the receiving condition detecting section 7. If the broadcasting receiving condition on the channel is inferior, the control section proceeds to step ST210 to make a decision as to the elapsed time of the search timer 83. As a result, unless the elapsed time reaches a preset time K, the control section 8 returns to step ST205 to repeat the receiving processing and receiving condition decision (step ST206) with incrementing the search channel number by one cyclically again. If the elapsed time of the timer reaches the value K at step ST210, the control section 8 tunes to the original received station to receive it again at step ST211, and returns to step ST203 to restart the receiving condition monitoring.

If the control section 8 detects a good reception channel at step ST206, it obtains the broadcasting-related information from the signal demultiplexing section 5 at step ST207.
If making a decision from the group station information contained in the broadcasting-related information that the group of the searched and received broadcasting agrees with that of the originally received station at step ST208, the control section 8 controls in such a manner as to receive the searched and received station as the new received station at step ST209, to set the search channel number in the search channel storing section 81 as the new receiving channel number at step ST202, and to carry out the processing of the receiving condition monitoring at step ST203 and on.
At step ST208, if the searched and received broadcasting group differs from the group of the original received station, the control section 8 proceeds to step ST210 to perform the same operation as mentioned above.

As described above, the digital broadcasting receiver in accordance with the present invention does not search, in the group station search operation, the entire broadcasting band at a time, but searches an appropriate division of the broadcasting band one by one with limiting the number of channels to be searched at a time. Thus, every time the search of each division has been completed, the control section 8 checks the receiving condition of the original channel, and returns, when the receiving condition recovers,to the broadcasting receiving operation with suspending the search.

Therefore it can recover the broadcasting reception of the original channel quickly with reducing the interruption duration of the broadcasting reception due to the search even in the condition in which the receiving condition deteriorates temporarily during the traveling of the vehicle and recovers in a short time.
Although it is assumed in the foregoing description that the receiving condition is detected according to the level of the signal from the tuning section 2, it can also be detected according to the error occurrence frequency from the error correcting section 4.

The foregoing description is made by way of example that carries out the group station search operation automatically when the receiving condition of the current received station deteriorates. However, the user sometimes wishes to start the group station search manually before the receiving condition of the current received station deteriorates significantly when the service areas of the broadcasting station overlap. In the case of the start of such group station search intended by the user, it is preferable to search for another group station as quickly as possible without returning to the original received station, which differs from the case of carrying out the automatic group station search operation.

Such a receiver function can be implemented by carrying out, in the case of performing the group station search operation automatically when the receiving condition of the current received station deteriorates, the division search as shown by the embodiments in accordance with the present invention; and by employing, when the user directly instructs the group station search operation with a control button and the like, the conventional method of continuously searching the entire broadcasting band.

In addition, although the function that carries out the group station search operation automatically when the receiving condition of the current received station deteriorates is useful for users who travel across a plurality of broadcasting service areas, the function is insignificant for users whose traveling region is limited to a single broadcasting service area.
Furthermore, it is preferable for the users to circumvent the receiving interruption that will occur when the search is started because of the receiving condition deterioration due to a tunnel or shielding like a building.

The receiver function of coping with such users with different traveling regions is implemented by enabling the users to select to make the automatic group station search or not.

### INDUSTRIAL APPLICABILITY

As described above, the digital broadcasting receiver in accordance with the present invention is configured in such a manner as to check the receiving condition of the original receiving channel every time the second station search operation involved in the deterioration of the receiving condition of the current received station searches the prescribed number of channels in the search tuning operation of the onboard digital broadcasting receiver; and hence is suitable for offering a digital broadcasting receiver capable of returning to the receiving operation of the current received station quickly in the case where the receiving condition of the current received station recovers in a short time during the second station search involved in the deterioration of the receiving condition of the current received station.

## Claims

1. A digital broadcasting receiver comprising:
a tuning section for performing selective reception of a broadcasting channel;
a digital demodulating section for performing digital demodulation of a broadcasting signal;
an error correcting section for performing error correction of demodulation data said digital demodulating section demodulates;
a signal demultiplexing section for demultiplexing broadcasting data into individual contents;
a video audio decoding section;
a receiving condition detecting section; and
a control section having a search channel storing section and a search channel number counter section, wherein
said control section carries out tuning control by searching for, when a receiving condition of a current received station deteriorates, a second received station with referring to broadcasting-related information transmitted by broadcasting, and by checking the receiving condition of an original receiving channel every time a prescribed number of channels are searched.

2. A digital broadcasting receiver comprising:
a tuning section for performing selective reception of a broadcasting channel;
a digital demodulating section for performing digital demodulation of a broadcasting signal;
an error correcting section for performing error correction of demodulation data said digital demodulating section demodulates;
a signal demultiplexing section for demultiplexing broadcasting data into individual contents;
a video audio decoding section;
a receiving condition detecting section; and
a control section having a search timer, wherein
said control section carries out tuning control by searching for, when a receiving condition of a current received station deteriorates, a second received station with referring to broadcasting-related information transmitted by broadcasting, and by checking the receiving condition of an original receiving channel every time a prescribed search time has elapsed.

3. The digital broadcasting receiver according to claim 1, wherein
said control section searches for, when the receiving condition of the current received station deteriorates, the second received station with referring to the broadcasting-related information transmitted by the broadcasting, and searches for, in response to an operation input through an operating section, a second receivable station with referring to the broadcasting-related information, wherein a search at a time when the operation is input through the operating section is carried out without checking the receiving condition of the original receiving channel.

4. The digital broadcasting receiver according to claim 2, wherein
said control section searches for, when the receiving condition of the current received station deteriorates, the second received station with referring to the broadcasting-related information transmitted by the broadcasting, and searches for, in response to an operation input through an operating section, a second receivable station with referring to the broadcasting-related information, wherein a search at a time when the operation is input through the operating section is carried out without checking the receiving condition of the original receiving channel.

5. The digital broadcasting receiver according to claim 1, wherein
when the receiving condition of the current received station deteriorates, said control section can determine, in response to an operation input through an operating section, an operation setting for search control of a second receivable station based on selection according to the broadcasting-related information.

6. The digital broadcasting receiver according to claim 2, wherein
when the receiving condition of the current received station deteriorates, said control section can determine, in response to an operation input through an operating section, an operation setting for search control of a second receivable station based on selection according to the broadcasting-related information.
